# DEMANDE DE BREVET EUROPEEN

(11) **EP 4 382 788 A1**
(43) Date de publication de la demande: **12.06.2024**
(21) Numéro de dépôt: 23210028.9
(22) Date de dépôt: 15.11.2023
(51) Int. Cl.: F16K 99/00

(54) **DISPOSITIF DE TYPE VANNE FLUIDIQUE NORMALEMENT FERMÉE**

(30) Priorité: 08.12.2022 FR 2212948
(71) Demandeur: Commissariat à l'énergie atomique et aux énergies alternatives, 75015 Paris (FR)
(72) Inventeur: BLAIRE, Guillaume, 38054 Grenoble cedex 09 (FR); ROUX, Jean-Maxime, 38054 Grenoble cedex 09 (FR); ALESSIO, Manuel, 38054 Grenoble cedex 09 (FR)
(74) Mandataire: INNOV-GROUP

(57) **Abrégé**

L'invention concerne un dispositif de type vanne fluidique normalement fermée comprenant un support (3) dans lequel est réalisé un passage fluidique destiné à être traversé par un fluide (F), ledit dispositif comprenant :
- Une membrane (4) déformable, apte à se déplacer entre une position de fermeture du passage fluidique et une position d'ouverture du passage fluidique,
- Des moyens de maintien mécanique de la membrane (4) en position de fermeture,
- Les moyens de maintien mécanique comportant un premier élément (10_1, 10_2, 10_3) réalisé dans un matériau à changement de phase, capable de passer d'un état solide à un état liquide sous l'effet de la chaleur et un deuxième élément (20_1, 20_2, 20_3).

## Description

### Domaine technique de l'invention

La présente invention se rapporte à un dispositif de type vanne fluidique normalement fermée.

### Etat de la technique

Il est connu des documents US2012/064597A1**,** US2013/130262A1**,** US2007/166199A1 et US2006/076068A1 des dispositifs microfluidiques comprenant un réseau microfluidique de capsules et de canaux reliant les capsules entre elles. Chaque capsule microfluidique comporte une chambre dans laquelle débouche un canal d'entrée et dont ressort un canal de sortie. Une membrane déformable est commandée entre deux positions pour conférer deux états distincts à la capsule, un premier état dans lequel le canal d'entrée communique avec le canal de sortie via la chambre autorisant un transfert de fluide, et un deuxième état dans lequel la membrane bloque la communication entre les deux canaux, empêchant l'écoulement de fluide et le remplissage de la chambre de la capsule. La commande de la membrane entre ses deux états est réalisée à l'aide de moyens pneumatiques, par exemple en exerçant sur elle une pression positive ou une pression négative.

La demande de brevet EP3326717A1 propose une autre solution dans laquelle la vanne est créée par l'ajout dans une cavité d'un liquide destiné à former un élément en matériau déformable. Le mécanisme d'actionnement de l'invention est commandé par une unité de commande et de traitement pour déformer l'élément en matériau déformable de chaque capsule, par exemple en exerçant une pression ou une impulsion de pression au moyen d'un fluide de pression, et en particulier d'un gaz de pression via les trous d'actionnement de chaque capsule.

Ces différentes solutions de vannes sont à actionnement pneumatique et nécessitent des moyens externes complexes pour être actionnées. Ces moyens comportent généralement des pompes ou des compresseurs externes comme sources de pression, des régulateurs de pression, et parfois aussi des électrovannes. Ces moyens sont externes aux dispositifs microfluidiques si bien que des connexions pneumatiques étanches doivent être assurées. En outre ces moyens doivent être commandés et régulés par des mécanismes dédiés ou encore pilotés par des circuits électroniques et éventuellement des logiciels.

Il peut être avantageux de disposer d'un mécanisme de vanne dont l'actionnement est simple et fiable, sans recourir à des moyens complexes nécessitant d'être pilotés ou régulés, ni à des composants électromécaniques en mouvement sensibles aux vibrations, et sans reposer sur des connexions pneumatiques qui peuvent présenter des défauts d'étanchéité.

Les brevets US7338028B2**,** US8585013B2 et US7748962B2 décrivent des vannes fluidiques, actionnables par effet magnétique en déplaçant un aimant permanent. La vanne comporte une partie métallique ou magnétique actionnable sous l'effet de l'aimant permanent. Ces différentes vannes fluidiques ne sont pas forcément satisfaisantes dans la mesure où elles imposent l'intégration d'éléments métalliques ou l'utilisation de matériaux magnétiques dans un composant faits de matériaux polymères. Or l'intégration de matériaux de différentes natures est non triviale et rend les procédés de recyclage plus complexes. Il peut donc être avantageux de disposer d'un dispositif microfluidique fait de matériaux qui suivent une même filière de recyclage, voire un même procédé de recyclage.

Une autre approche repose sur l'utilisation de paraffine ou de composés similaires fusibles, à changement de phase, ("PCM-Phase Change Material") pour réaliser de l'actionnement et du contrôle microfluidique. La revue « Review on miniaturized paraffin phase change actuators, valves, and pumps » (S. Ogden et col., 2013*)* en fournit une description détaillée.

L'actionnement thermique utilisant la paraffine comme matériau à changement de phase est relativement populaire en raison de son principe d'actionnement simple, de son faible coût de fabrication, de sa relativement bonne biocompatibilité et de sa capacité à fournir des courses importantes et des forces d'actionnement élevées à petite échelle (cf. publication précédemment citée).

La publication référencée *"Self-Contained, Fully Integrated Biochip for Sample Préparation, Polymerase Chain Reaction Amplification, and DNA Microarray Détection"* présente le fonctionnement de deux types de vannes. Le principe de fonctionnement de ces deux types de vanne est le même. Un bouchon de paraffine solidifié est chauffé par une zone de chauffe de taille comparable à la vanne. Le bouchon fondu est transporté par le fluide sous pression vers des zones plus froides où il se solidifie. Dans le deuxième type de vanne, un volume d'air est emprisonné par la paraffine. Lors de la chauffe nécessaire à la transition de phase, ce volume d'air se dilate et pousse la paraffine dans le canal fluidique.

La publication référencée " Edwin T. Carlen and Carlos H. Mastrangelo, Surface Micromachined Paraffin-Actuated Microvalve, Journal of microelectromechanical systems, 11, n° 5, octobre 2002*",* propose quant à elle une solution pour isoler le matériau à changement de phase du fluide dont l'écoulement doit être régulé. Cette solution s'appuie sur une membrane souple en polymère. Lorsqu'il est chauffé au-dessus de sa température de fusion, le matériau à changement de phase perd la forme calibrée qui lui a été donnée par construction et vient bloquer l'écoulement du fluide dans la vanne.

Toutefois, ces vannes actuelles qui utilisent un matériau à changement de phase présentent des inconvénients :
- Le matériau à changement de phase employé est souvent en contact avec le fluide, dont il autorise ou non le passage. Or ce matériau n'est pas forcément complètement inerte sur un plan chimique ou biochimique. Il est donc systématiquement nécessaire de s'assurer de sa compatibilité avec les réactifs et les analytes recherchés lors de la phase de conception.
- Le matériau à changement de phase ne présente généralement pas les mêmes propriétés mécaniques et thermiques que le matériau formant le canal fluidique. Un choc ou une variation de la température peut alors provoquer un descellement du bouchon formé et donc une micro-fuite.
- Il est difficile de disposer une quantité précise de matériau à changement de phase pour former le ou les bouchon(s) souhaité(s), dans des circuits fluidiques dotés de micro-canaux.

La demande de brevet CN105465480A décrit une vanne fluidique ayant une architecture à membrane déformable.

Il reste pertinent de disposer d'un dispositif de type vanne fluidique utilisant un matériau à changement de phase et apte à pallier les inconvénients des solutions antérieures. Le dispositif doit en effet :
- Permettre d'éviter la pollution du fluide,
- Être facile à mettre en oeuvre, notamment grâce à un dépôt facilité du composé en matériau à changement de phase,
- Être agencé pour former une vanne normalement fermée.

### Exposé de l'invention

L'invention concerne ainsi un dispositif de type vanne fluidique normalement fermée comprenant un support dans lequel est réalisé un passage fluidique destiné à être traversé par un fluide, ledit dispositif comprenant :
- Une membrane déformable, apte à se déplacer entre une position de fermeture du passage fluidique et une position d'ouverture du passage fluidique,
- Des moyens de maintien mécanique de la membrane en position de fermeture,
- Les moyens de maintien mécanique comportant un premier élément réalisé dans un matériau à changement de phase, capable de passer d'un état solide à un état liquide sous l'effet de la chaleur et un deuxième élément,
- A l'état solide, le premier élément étant positionné entre ledit deuxième élément et la membrane dans une quantité suffisante pour, en coopération avec le deuxième élément, appliquer une contrainte mécanique contre la membrane en vue de la maintenir dans la position de fermeture,
- A l'état liquide, le premier élément étant configuré pour libérer la contrainte mécanique exercée contre la membrane, créant un espace suffisant pour que la membrane se déplace jusqu'à sa position d'ouverture,
- Le deuxième élément étant réalisé dans un matériau poreux à cellules ouvertes, le premier élément à l'état solide étant en contact au moins partiellement avec le deuxième élément et, à l'état liquide apte à pénétrer dans les cellules ouvertes du deuxième élément, libérant ledit espace nécessaire à la membrane (4) pour se déplacer jusqu'à sa position d'ouverture.

Selon une particularité, le deuxième élément est enfoncé en force dans un puits du support.

Selon une autre particularité, le passage fluidique est réalisé entre une entrée fluidique et une sortie fluidique, réalisées dans le support.

Selon une autre particularité, le premier élément est réalisé sous la forme d'une boule de matière déposée contre la membrane, à l'aplomb de l'entrée fluidique ou de la sortie fluidique.

Selon une autre particularité, le matériau à changement de phase est choisi parmi une paraffine, la glace, un polymère tel que le polyéthylène basse densité, le PLA (pour "Poylactic Acid") et l'ABS (pour "Acrylonitrile Butadiène Styrène).

Selon une particularité, la paraffine est choisie parmi un ou plusieurs des composés suivants : tétracosane, heneicosane, Docosane, Tricosaene, Pentacosane, Hexacosane, Heptacosane, Octocosane, Triacontane, Dotriacontane, Tritriacontane.

Selon une autre particularité, le deuxième élément est réalisé dans un matériau choisi parmi un polyéthylène à masse molaire très élevée, le PLA et l'ABS.

Selon une autre particularité, la membrane est réalisée dans un matériau choisi parmi l'Ecoflex (marque déposée), silicone, PDMS, cellophane, caoutchouc, élastomère et PTFE.

Il faut noter qu'il n'est pas trivial de proposer un dispositif qui utilise un composé réalisé dans un matériau à changement de phase pour une vanne de type normalement fermé. En effet, de manière naturelle, le matériau à changement de phase a tendance à se dilater avec l'augmentation de la température, ce qui le rend plus facilement utilisable dans une vanne de type normalement ouverte.

### Brève description des figures

D'autres caractéristiques et avantages vont apparaître dans la description détaillée qui suit faite en regard des dessins annexés dans lesquels :
- Les figures 1A et 1B montrent une première variante de réalisation du dispositif de l'invention, respectivement avec la vanne à l'état fermé et à l'état ouvert ;
- Les figures 2A à 2C montrent une deuxième variante de réalisation du dispositif de l'invention, respectivement avec la vanne à l'état fermé, en cours d'ouverture, et à l'état ouvert ;
- La figure 3 montre une troisième variante de réalisation du dispositif de l'invention, avec la vanne à l'état fermé ;

### Description détaillée d'au moins un mode de réalisation

L'invention vise un dispositif de type vanne fluidique V_1, V_2, V_3 normalement fermée.

Pour la suite de la description, il faut noter qu'une vanne est dite à l'état ouvert (état 1 ou ON) lorsqu'elle laisse passer le fluide et elle est dite à l'état fermé (état 0 ou OFF) lorsqu'elle bloque le passage du fluide. Dans un mode dit normalement fermé, la vanne est à l'état fermé en l'absence de commande et bloque le passage du fluide. Lorsque la vanne est commandée, celle-ci passe à l'état ouvert, permettant de libérer le passage du fluide.

Le dispositif comporte un circuit fluidique comprenant au moins un passage fluidique, à travers lequel un fluide F est amené à circuler. Ce passage fluidique est par exemple agencé entre une entrée fluidique IN et une sortie fluidique OUT. La vanne V_1, V_2, V_3 est agencée pour contrôler le passage du fluide entre cette entrée et cette sortie, c'est-à-dire bloquer le passage du fluide F entre l'entrée et la sortie lorsqu'elle est à l'état fermé ou libérer le passage du fluide F entre l'entrée et la sortie lorsqu'elle est à l'état ouvert.

L'entrée fluidique IN et la sortie fluidique OUT peuvent être formées chacune sous la forme d'un canal, par exemple orienté verticalement, débouchant chacune dans un canal transversal du circuit fluidique.

Le dispositif comporte un support 3, tel qu'un composant ou une carte fluidique, dans lequel est créé le circuit fluidique et donc l'entrée fluidique et la sortie fluidique.

De manière non limitative, le support 3 peut être réalisé dans un matériau de type PMMA (Polyméthacrylate de méthyle), silicium, COC ("Cyclic Olefin Copolymer"), PDMS (Polydiméthylsiloxane), verre, PEEK (Polyetheretherketone), PS (Polystyrène). Le circuit fluidique peut être réalisé par fraisage, moulage ou autres techniques adaptées. Le dispositif, et notamment le support 3, peut être obtenu par assemblage de plusieurs composants ou plaques.

Le dispositif comporte également une membrane 4 déformable, capable de se déplacer entre deux positions, une position de fermeture dans laquelle elle bloque de manière étanche le passage du fluide F entre l'entrée fluidique IN et la sortie fluidique OUT et une position d'ouverture dans laquelle elle libère le passage du fluide F entre l'entrée fluidique IN et la sortie fluidique OUT. La membrane 4 comporte une face intérieure orientée du côté fluidique et destinée à être en contact avec le fluide F qui circule à travers le passage fluidique, et une face extérieure opposée, non en contact avec le fluide.

La membrane 4 peut être réalisée dans un matériau très déformable élastiquement, tel que par exemple Ecoflex (marque déposée), mais aussi silicone, PDMS, cellophane, caoutchouc, élastomère, PTFE (Polytétrafluoroéthylène).

La membrane 4 est agencée dans le support 3 fluidique, par exemple en étant prise entre deux plaques du support.

En mode normalement fermé, la membrane 4 est maintenue dans sa position de fermeture. Dans l'invention, cette position de fermeture est maintenue par l'exercice d'une contrainte mécanique.

Le dispositif comporte également un premier élément 10_1, 10_2, 10_3 réalisé dans un matériau à changement de phase solide-liquide, pouvant également être appelé matériau fusible. Ce type de matériau est configuré pour passer d'un état solide à un état liquide (ou fondu) lorsqu'il est chauffé à une certaine température, appelée température de fusion (référencée Tf ci-dessous).

De manière non limitative, ce matériau à changement de phase solide-liquide est par exemple une paraffine, par exemple choisie parmi le tétracosane, heneicosane (Température de fusion Tf=40.5°C), Docosane (Tf=44.4°C), Tricosane (Tf=47°C), Pentacosane (Tf= 54°C), Hexacosane (Tf= 56.4°C), Heptacosane (Tf= 59.5°C), Octocosane (Tf=64.5°C), Triacontane (Tf= 65.8°C), Dotriacontane (Tf= 69.7°C), Tritriacontane (Tf= 72°C). Il pourrait également être la glace, un polymère tel que le polyéthylène basse densité, le PLA (pour "Poylactic Acid") ou l'ABS (pour "Acrylonitrile Butadiène Styrène).

De manière non limitative, ce premier élément 10_1, 10_2, 10_3 peut être déposé à chaud, à froid, par frittage, moulage ou par impression 3D.

Le dispositif comporte également un deuxième élément 20_1, 20_2, 20_3 réalisé dans un matériau pouvant être au moins partiellement poreux à cellules ouvertes ou non-poreux (voir les deux modes de réalisation ci-après). Ce deuxième élément 20_1, 20 2, 20_3 coopère avec le premier élément à l'état solide pour appliquer une contrainte mécanique sur la membrane en vue de la maintenir dans sa position de fermeture.

De manière non limitative, ce deuxième élément peut être réalisé dans un matériau tel qu'un polyéthylène à masse molaire très élevée (appelé couramment UHMPE). Il pourrait également s'agir d'un matériau tel que le PLA ou l'ABS.

De manière non limitative, ce deuxième élément peut être réalisé en impression 3D, par usinage, ou par moulage.

Le premier élément 10_1, 10_2, 10_3 et le deuxième élément 20_1, 20_2, 20_3 peuvent être réalisés sous la forme de deux pièces indépendantes.

Le maintien de la membrane 4 est obtenu en utilisant le premier élément 10_1, 10_2, 10_3 en matériau à changement de phase à l'état solide et le deuxième élément 20_1, 20_2, 20_3, fixe par rapport au support 3. Le deuxième élément est avantageusement fixé au support mais il faut comprendre qu'il pourrait être monté sur un châssis distinct du support 3, maintenu fixe par tous moyens par rapport au support 3. Sur les figures annexées, il est par exemple enfoncé en force sous la forme d'un bouchon dans un puits 31 du support 3.

A l'état solide, le premier élément 10_1, 10_2, 10_3 est positionné entre ledit deuxième élément et la membrane dans une quantité suffisante pour, en coopération avec le deuxième élément 20_1, 20_2, 20_3, appliquer une contrainte mécanique sur la membrane 4 en vue de la maintenir dans la position de fermeture.

Le passage à l'état liquide (ou fondu) d'au moins une partie du matériau composant le premier élément 10_1, 10_2, 10_3 permet de libérer la contrainte mécanique sur la membrane 4, en créant un espace de volume non nul dans lequel la membrane 4 est apte à se déplacer, et ainsi permettre l'ouverture du passage fluidique.

Lorsque le deuxième élément 20_1 est réalisé dans un matériau non poreux, l'espace libéré par le changement de phase du matériau du premier élément 10_1 est créé par le simple changement de phase du matériau composant ce premier élément. Autrement dit, le changement de phase du matériau permet de modifier le volume occupé par le premier élément 10_1 et de libérer un espace suffisant pour la déformation de la membrane 4 vers sa position d'ouverture.

Lorsque le deuxième élément 20_2 est réalisé dans un matériau poreux, le matériau à changement de phase à l'état liquide du premier élément 10_2 est apte à pénétrer dans les cellules ouvertes du deuxième élément 20_2, libérant ainsi ledit espace suffisant pour que la membrane 4 puisse se déformer et ouvrir le passage fluidique.

Le deuxième élément 20_2 réalisé en matériau poreux doit avantageusement présenter un caractère mouillant suffisant pour absorber le premier élément 10_2 lorsque celui-ci est passé à l'état liquide. De manière connue, on dit qu'un matériau présente un caractère mouillant vis-à-vis d'un autre matériau lorsque sa surface exposée au liquide possède un angle de contact qui est inférieur à 90°.

Dans cette dernière configuration, la présence d'un évent 30_2 sera nécessaire pour assurer la pénétration du liquide dans les cellules ouvertes du deuxième élément 20_2.

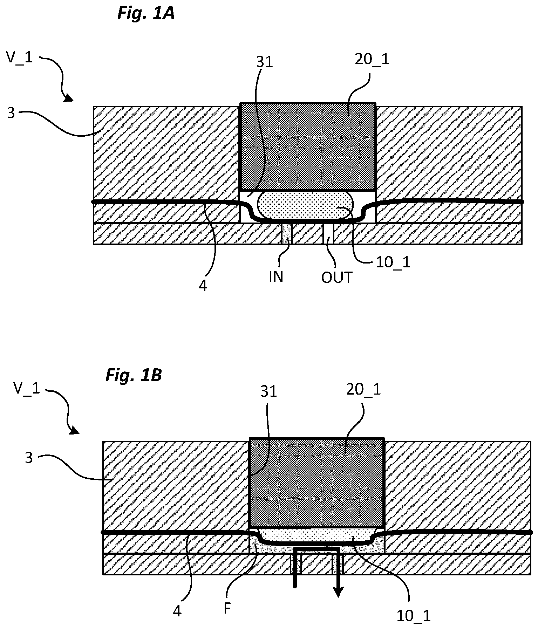

Les figures 1A et 1B montrent une première variante de réalisation du dispositif de l'invention, utilisant une vanne V_1, dans laquelle le deuxième élément 20_1 est réalisé dans un matériau qui est choisi non poreux.

Sur la figure 1A, le premier élément 10_1 est par exemple déposé directement sur la face supérieure de la membrane 4 et vient combler l'espace présent entre le deuxième élément 20_1 et la membrane 4 lorsque celle-ci est dans la position de fermeture. Le deuxième élément 20_1 est logé dans le puits 31, par exemple réalisé dans le support 3.

Le deuxième élément 20_1 peut être inséré en force dans le puits 31, lui permettant ainsi d'être fixe et d'exercer la contrainte mécanique contre le premier élément 10_1 à l'état solide et donc contre la membrane 4 pour la maintenir dans sa position de fermeture. Il peut également être fixé par blocage dans le puits 31, à l'aide d'une pièce supplémentaire, ou même collé. Etant isolé du fluide par la membrane, le choix du matériau et éventuellement de la colle sont libres et ne risquent pas d'entraîner des phénomènes de pollution du fluide.

Sur la figure 1B, le premier élément 10_1 est chauffé et passe à l'état liquide. En devenant liquide, le premier élément 10_1 se déforme, celui-ci n'étant alors pas contraint suivant au moins une direction peut s'écouler dans cette direction, relâchant ainsi la contrainte mécanique sur la membrane 4. Autrement dit, dans cet état liquide, l'espace occupé par le premier élément 10_1 est modifié, permettant de relâcher la contrainte mécanique exercée sur la membrane 4 et de la libérer, pour qu'elle puisse se déformer jusqu'à sa position d'ouverture, aidé en cela par la pression du liquide injecté dans l'entrée fluidique.

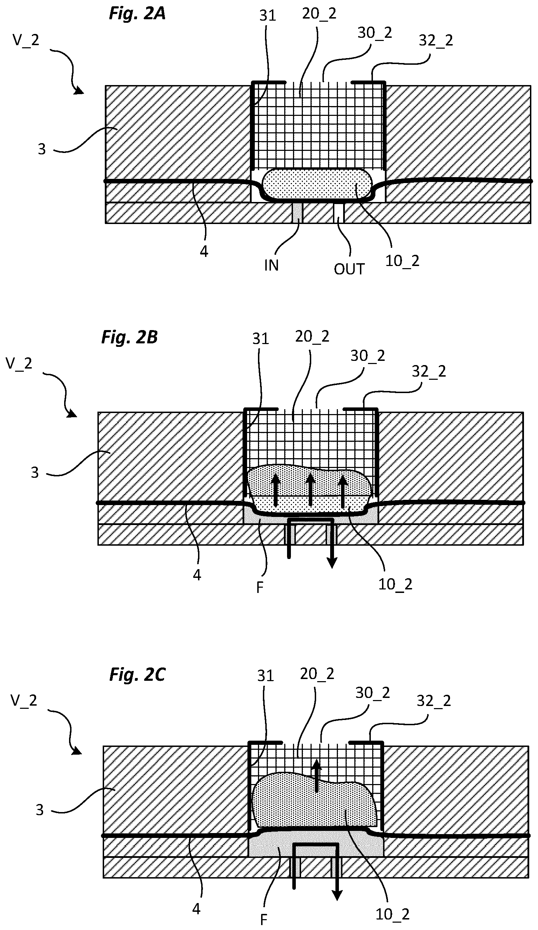

Les figures 2A à 2C montrent une deuxième variante de réalisation du dispositif, utilisant une vanne V_2 dans laquelle le deuxième élément 20_2 est réalisé dans un matériau poreux à cellules ouvertes selon les caractéristiques définies ci-dessus.

Sur la figure 2A, l'agencement est similaire à celui de la figure 1A ci-dessus, à la différence que le deuxième élément 20_2 est réalisé dans un matériau poreux à cellules ouvertes. La présence d'un évent 30_2 est également nécessaire, celui-ci débouchant dans ledit puits 31. Dans ce deuxième mode de réalisation, le premier élément doit être au moins partiellement en contact mécanique avec le deuxième élément. Une pièce de maintien 32_2 du deuxième élément 20_2 est également ajoutée pour assurer son maintien dans le support 3. Cette pièce 32_2 est cependant optionnelle et l'enfoncement en force peut être également utilisée, comme dans la réalisation précédente.

Sur la figure 2B, le premier élément 10_2 est chauffé pour passer à l'état liquide.

Par affinité avec le caractère poreux du deuxième élément 20_2 et éventuellement aidé par la pression du fluide F injecté dans le circuit, le matériau liquide formant le premier élément 10_2 vient imprégner le deuxième élément 20_2, en occupant ses cellules ouvertes. Ainsi, on vient libérer la contrainte mécanique exercée contre la membrane 4, en libérant un espace dans lequel la membrane est apte à se déplacer jusqu'à sa position d'ouverture.

Sur la figure 2C, le matériau liquide formant le premier élément 10_2 a totalement pénétré le deuxième élément 20_2, laissant à la membrane 4 la totalité de l'espace pour se déformer.

Le premier élément 10_1, 10_2 en matériau à changement de phase peut être réalisé selon toutes formes telles que pâte, poudre, copeaux, ou toutes autres particules plus ou moins grosses, l'objectif étant que ce premier élément :
- A l'état solide, vienne au moins en partie combler un espace présent entre le deuxième élément et la membrane et,
- A l'état liquide, libère la contrainte mécanique exercée sur la membrane.

Il faut noter que des couches/pièces intermédiaires peuvent être présentes entre le premier élément 10_1, 10_2 et la membrane 4.

Dans cette deuxième variante de réalisation, la quantité de matériau à changement de phase peut rester limitée. La forme de ce matériau est également non contrainte (copeaux, poudre...).

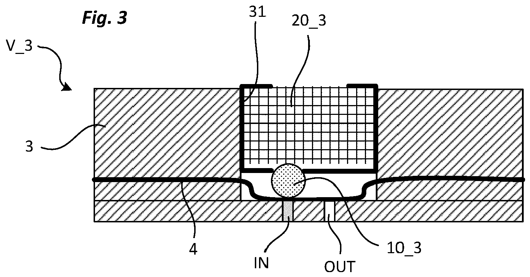

La figure 3 montre une autre variante de réalisation du dispositif. Selon cette variante, le premier élément 10_3 se présente sous la forme d'au moins une boule de matière fusible venant se positionner entre la membrane 4 et le deuxième élément 20_3, à l'aplomb de l'entrée fluidique IN ou de la sortie fluidique OUT. Sur la figure 3, la boule de matière est en contact mécanique avec la membrane 4 et est agencée pour, d'un côté, venir en appui contre le deuxième élément 20_3 et de l'autre côté pour exercer un appui contre la membrane 4, de manière à la maintenir dans sa position de fermeture (lorsque la boule est dans l'état solide). Cette variante de réalisation permet de relâcher des contraintes sur la précision du volume de matériau à changement de phase à dispenser.

Il faut noter que :
- La couche de matériau à changement de phase présente avantageusement une épaisseur maximale strictement supérieure à l'épaisseur de la membrane 4. En effet, la contrainte mécanique exercée par le deuxième élément et le premier élément a tendance à venir comprimer la membrane. Lorsque cette contrainte mécanique est relâchée par fusion du matériau à changement de phase, un espace suffisant doit être créé pour que la membrane 4 puisse se déformer et libérer le passage fluidique.
- L'exercice de la contrainte mécanique sur la membrane 4, élastique et déformable, permet de plus facilement gérer les incertitudes mécaniques du système. Autrement dit, ce principe d'application d'une contrainte mécanique offre des garanties sur la fermeture du passage fluidique.
- La température de fusion du matériau à changement de phase doit être choisie inférieure à la température de fusion du support 3. Si le matériau du support 3 est un assemblage de couches assemblées et collées en elles par scellement thermique, la température de fusion du matériau fusible doit être très inférieure à la température de transition vitreuse des matériaux constituant le support.
- La température de fusion du matériau à changement de phase doit être inférieure à la température de transition vitreuse de la membrane 4.
- La membrane 4 doit disposer d'une composante élastique conséquente pour se déformer élastiquement sans déchirure.
- Si le fluide F sous pression est une solution aqueuse, la membrane 4 doit être étanche à la vapeur d'eau.

Le dispositif décrit semble particulièrement bien adapté pour contrôler le relargage d'un fluide contenu dans un réservoir sous pression.

Le dispositif peut être couplé avec un système de chauffage adapté (non représenté) qui peut être soit commun à plusieurs dispositifs d'un même support ou chacun indépendant. Il est aussi possible d'employer un système de chauffage qui comporte plusieurs branches résistives distinctes, dédiées chacune à l'actionnement d'un dispositif distinct.

Le dispositif comporte de nombreux avantages, parmi lesquels :
- Une vanne ayant une conception sans risque de pollution du fluide par le matériau à changement de phase, celui-ci n'étant pas en contact direct avec le fluide ;
- Une vanne ayant une conception sans commande par une pièce mobile, la membrane étant déplacée par la pression du fluide lorsque l'espace nécessaire au déplacement de la membrane est libéré par la fusion du matériau à changement de phase du premier élément ;
- Une solution qui garantit un fonctionnement fiable et qui ne souffre pas des incertitudes de conception et réalisation mécanique du dispositif, de l'usure ou de la fatigue de composants électromécaniques, ou encore de défauts d'étanchéité de joints ;

## Revendications

1. Dispositif de type vanne fluidique normalement fermée comprenant un support (3) dans lequel est réalisé un passage fluidique destiné à être traversé par un fluide (F), ledit dispositif comprenant :
- Une membrane (4) déformable, apte à se déplacer entre une position de fermeture du passage fluidique et une position d'ouverture du passage fluidique,
- Des moyens de maintien mécanique de la membrane (4) en position de fermeture,
Ledit dispositif étant **caractérisé en ce que** :
- Les moyens de maintien mécanique comportent un premier élément (10_1, 10_2, 10_3) réalisé dans un matériau à changement de phase, capable de passer d'un état solide à un état liquide sous l'effet de la chaleur et un deuxième élément (20_1, 20_2, 20_3),
- A l'état solide, le premier élément (10_1, 10_2, 10_3) est positionné entre ledit deuxième élément (20_1, 20_2, 20_3) et la membrane (4) dans une quantité suffisante pour, en coopération avec le deuxième élément, appliquer une contrainte mécanique contre la membrane (4) en vue de la maintenir dans la position de fermeture,
- A l'état liquide, le premier élément (10_1, 10_2, 10_3) est configuré pour libérer la contrainte mécanique exercée contre la membrane (4), créant un espace suffisant pour que la membrane (4) se déplace jusqu'à sa position d'ouverture,
- Le deuxième élément (20_2, 20_3) est réalisé dans un matériau poreux à cellules ouvertes, le premier élément (10_2, 10_3) à l'état solide étant en contact au moins partiellement avec le deuxième élément et, à l'état liquide apte à pénétrer dans les cellules ouvertes du deuxième élément, libérant ledit espace nécessaire à la membrane (4) pour se déplacer jusqu'à sa position d'ouverture.

2. Dispositif selon la revendication 1, **caractérisé en ce que** le deuxième élément (20_1, 20_2, 20_3) est enfoncé en force dans un puits (31) du support.

3. Dispositif selon la revendication 1 ou 2, **caractérisé en ce que** le passage fluidique est réalisé entre une entrée fluidique (IN) et une sortie fluidique (OUT), réalisées dans le support (3).

4. Dispositif selon la revendication 3, **caractérisé en ce que** le premier élément (10_3) est réalisé sous la forme d'une boule de matière déposée contre la membrane (4), à l'aplomb de l'entrée fluidique ou de la sortie fluidique.

5. Dispositif selon l'une des revendications 1 à 4, **caractérisé en ce que** le matériau à changement de phase est choisi parmi une paraffine, la glace, un polymère tel que le polyéthylène basse densité, le PLA (pour "Poylactic Acid") et l'ABS (pour "Acrylonitrile Butadiène Styrène).

6. Dispositif selon la revendication 5, **caractérisé en ce que** la paraffine est choisie parmi un ou plusieurs des composés suivants : tétracosane, heneicosane, Docosane, Tricosaene, Pentacosane, Hexacosane, Heptacosane, Octocosane, Triacontane, Dotriacontane, Tritriacontane.

7. Dispositif selon l'une des revendications 1 à 6, **caractérisé en ce que** le deuxième élément (20_1, 20_2, 20_3) est réalisé dans un matériau choisi parmi un polyéthylène à masse molaire très élevée, le PLA (pour "Poylactic Acid") et l'ABS (pour "Acrylonitrile Butadiène Styrène).

8. Dispositif selon l'une des revendications 1 à 7, **caractérisé en ce que** la membrane (4) est réalisée dans un matériau choisi parmi l'Ecoflex (marque déposée), silicone, PDMS, cellophane, caoutchouc, élastomère et PTFE.
